Europäisches Patentamt

European Patent Office

Office européen des brevets

(11) Numéro de publication: **0 370 849**
**A1**

## (12) DEMANDE DE BREVET EUROPEEN

(21) Numéro de dépôt: 89403008.9

(22) Date de dépôt: 31.10.89

(51) Int. Cl.5: **B01D 29/11, B01D 29/52, B01D 29/72**

(30) Priorité: 07.11.88 FR 8814505

(43) Date de publication de la demande:
30.05.90 Bulletin 90/22

(84) Etats contractants désignés:
BE CH DE ES FR GB LI

(71) Demandeur: **FRAMATOME**
**Tour Fiat 1, Place de la Coupole**
**F-92400 Courbevoie(FR)**

Demandeur: **BERTIN & CIE**
**Zone Industrielle Les Gâtines Allée Gabriel Voisin**
**F-78370 Plaisir(FR)**

(72) Inventeur: **Bernou, Jean Louis**
**3 allée Charles Chaplin**
**F-94260 Fresnes(FR)**
Inventeur: **Dufau, Frédéric**
**9 Hameau de bois-fontaine**
**F-78170 La Celle St Cloud(FR)**
Inventeur: **Geahel, Isabelle**
**1 rue de la vieille Butte**
**F-78100 St Germain en Laye(FR)**
Inventeur: **Hache, Jean**
**3 allée de l'épée**
**F-78960 Voisins le Bretonneux(FR)**

(74) Mandataire: **Bouget, Lucien et al**
**Cabinet Lavoix 2, Place d'Estienne d'Orves**
**F-75441 Paris Cédex 09(FR)**

(54) Appareil de filtration comportant un dispositif de décolmatage par ultrasons et procédé de décolmatage correspondant.

(57) L'appareil de filtration comporte un faisceau d'éléments poreux (12) s'étendant sur une certaine longueur de l'enveloppe (2) et suivant une partie substantielle de sa section droite et au moins un ensemble de transducteurs d'ultrasons (15) disposés dans au moins un plan de section droite de l'enveloppe (2) dans des positions régulièrement espacées à la périphérie de l'enveloppe (2). Chacun des transducteurs (15) est placé à l'intérieur d'une ouverture traversant l'enveloppe (2) dans une direction perpendiculaire à l'axe de l'enveloppe (2). On émet des ultrasons à l'intérieur de l'enveloppe (2), en direction du faisceau de filtration (12), dans une zone délimitée par un cône dont l'axe a une direction perpendiculaire aux éléments filtrants et dont le sommet est situé au voisinage de la paroi de l'enveloppe (2). Les particules arrachées par les ultrasons aux éléments filtrants (12) sont récupérées par une conduite de vidange (8). L'invention s'applique en particulier au traitement de fluide dans le domaine de l'industrie nucléaire ou d'autres produits dangereux.

FIG.1

## Appareil de filtration comportant un dispositif de décolmatage par ultrasons et procédé de décolmatage correspondant

L'invention concerne un appareil de filtration comportant un dispositif de décolmatage par ultrasons de ses éléments filtrants et un procédé de décolmatage correspondant.

On connaît des appareils utilisés pour la filtration de liquides qui comportent, à l'intérieur d'une enveloppe, un ensemble d'éléments filtrants en matériau poreux disposés sur une certaine longueur de l'enveloppe dans une direction axiale et occupant une partie substantielle de la section droite de l'enveloppe. Une conduite d'arrivée de liquide à filtrer ainsi qu'une conduite d'évacuation du liquide après filtration débouchent dans l'enveloppe dans des zones situées de part et d'autre de la zone occupée, suivant la direction axiale de l'enveloppe, par les éléments filtrants.

L'enveloppe comporte un couvercle sur lequel est généralement fixée la conduite d'évacuation de liquide filtré, ce couvercle donnant accès à l'ensemble des éléments filtrants, par exemple pour effectuer leur remplacement.

Pendant le fonctionnement de l'appareil de filtration, les éléments filtrants en matériau poreux retiennent les impuretés transportées par le fluide qui viennent remplir progressivement les interstices du matériau poreux.

La perte de charge à travers les éléments filtrants augmente, au cours de l'utilisation de l'appareil de filtration. Pour maintenir des conditions de fonctionnement satisfaisantes de l'appareil de filtration, il est nécessaire de régénérer les éléments filtrants, après un certain temps de fonctionnement.

Une première méthode consiste à remplacer la totalité des éléments filtrants lorsque la perte de charge à travers ces éléments a dépassé une valeur limite déterminée, pour un débit donné.

Cette méthode comporte des inconvénients puisqu'elle nécessite le démontage d'une partie de l'appareil et qu'elle entraîne la manipulation d'un volume de déchets important, correspondant à l'ensemble des impuretés retenues par les éléments filtrants colmatés et ces éléments filtrants eux-mêmes.

Il en résulte des temps de main-d'oeuvre et une période d'indisponibilité de l'appareil de filtration accrus ; de plus, il peut être nécessaire de manipuler et traiter des quantités de déchets importantes, après décolmatage du filtre.

Des difficultés supplémentaires apparaissent lorsque les appareils de filtration tels que décrits ci-dessus sont utilisés pour le traitement de fluides contenant des impuretés constituées par des matière dangereuses. Il en est ainsi, par exemple dans le cas des centrales nucléaires, lorsque les appareils de filtration tels que décrits sont utilisés pour le traitement d'un fluide transportant des matières radio-actives, par exemple pour le traitement du fluide de refroidissement du réacteur. Dans ce cas, le personnel chargé du remplacement des éléments filtrants doit assurer la manutention d'un ensemble ayant un volume important, renfermant une grande quantité de matière radio-active. Ce personnel est donc exposé à des rayonnements ionisants et peut être contaminé lors de la manutention.

Un second procédé de régénération des éléments filtrants d'un appareil de filtration consiste à isoler l'appareil de son circuit normal et, sans le démonter, à faire passer à contre-courant une certaine quantité de fluide propre à travers les éléments fil trants. Ces éléments sont alors débarassés des particules retenues pendant le fonctionnement de l'appareil. Cette méthode évite le démontage du filtre et le remplacement des éléments filtrants. Cependant, elle ne résoud que partiellement les problèmes liés à la récupération de déchets pendant l'opération de régénération. Ces déchets se retrouvent en effet sous la forme d'effluents constitués par le fluide utilisé pour réaliser le nettoyage des éléments filtrants contenant les déchets séparés des éléments filtrants. Le volume de fluide nécessaire pour réaliser le nettoyage peut être assez élevé et, dans le cas de produits toxiques ou radio-actifs, les effluents sont pollués et doivent être traités avant leur rejet à l'extérieur du site de l'installation industrielle dans laquelle on utilise l'appareil de filtration. Le volume des effluents peut être très important, ce qui nécessite l'utilisation de stations de traitement coûteuses.

Afin d'éviter les inconvénients évoqués ci-dessus, on a proposé des procédés de régénération des appareils de filtration consistant à décolmater les éléments filtrants, au moyen d'ondes ultrasonores, dans le corps de filtre lui-même. Les ondes ultrasonores sont émises à l'intérieur du fluide remplissant le corps de filtre, de façon à atteindre les éléments filtrants et à assurer l'extraction des impuretés retenues par ces éléments filtrants. Les impuretés se rassemblent à la partie inférieure du filtre et peuvent être évacuées par une conduite de vidange. L'émission d'ondes ultrasonores au sein du fluide remplissant le corps de filtre crée un champ de pression acoustique. Si l'amplitude de ce champ de pression est suffisante, il en résulte un phénomène de cavitation ; pour celà, il suffit que les dépressions moyennes créées au sein du liquide soient au moins égales à la différence de pression entre la pression réelle et la tension de vapeur du liquide à la température considérée.

Ce phénomène de cavitation entraînant la formation de bulles de vapeur peut être entretenu par le champ acoustique. Les ondes de choc ainsi que les micro-courants tourbillonnaires qui en résultent permettent l'extraction des particules filtrées et captées par le milieu poreux.

Cette opération de nettoyage ne nécessite pas de démontage ou de modification du filtre ; les tuyauteries d'entrée et de sortie de fluide reliées au corps de filtre ne doivent être isolées du circuit d'utilisation que pendant une durée limitée.

Dans le certificat d'utilité français n° 2.421.661, on a décrit un procédé et une installation de décolmatage d'un filtre du type décrit ci-dessus utilisant des transducteurs émetteurs d'ultrasons qui peuvent être disposés dans la paroi du corps de filtre lui-même. Cependant, les transducteurs utilisés sont disposés à une extrémité du corps de filtre et généralement sur le couvercle. Il en résulte un fonctionnement peu satisfaisant, dans le cas où l'émission acoustique doit intéresser le volume d'un faisceau d'éléments de filtration constitué par des éléments filtrants allongés placés suivant la direction axiale de l'enveloppe.

On connaît également (GB-A-1.166.331 et US-A-4.158.629) des dispositifs de filtration de forme tubulaire comportant des moyens de décolmatage constitués par des transducteurs ultrasoniques disposés contre la paroi externe du filtre et alignés suivant une génératrice de cette paroi. De tels moyens de colmatage ne permettent pas de décolmater de manière efficace un faisceau d'éléments filtrants occupant une partie substantielle de la section droite d'une enveloppe de filtre cylindrique.

Le but de l'invention est donc de proposer un appareil de filtration comportant une enveloppe cylindrique, une conduite d'arrivée de liquide à filtrer dans l'enveloppe, une conduite d'évacuation de liquide filtré et un moyen de filtration interposé entre lesdites conduites réalisé en un matériau poreux ainsi qu'un dispositif de décolmatage par ultrasons du moyen de filtration poreux comportant au moins un transducteur d'ultrasons, cet appareil de filtration pouvant être décolmaté de manière efficace.

Dans ce but, il comporte un faisceau d'éléments poreux s'étendant sur une certaine longueur de l'enveloppe dans une direction axiale et sur une partie substantielle de sa section droite et au moins un ensemble de transducteurs disposés dans au moins un plan de section droite de l'enveloppe de l'appareil de filtration dans des positions régulièrement espacées à la périphérie de l'enveloppe,
- et chacun des transducteurs est placé à l'intérieur d'une ouverture traversant l'enveloppe dans une direction perpendiculaire à l'axe de l'enveloppe de manière à émettre des ultrasons à l'intérieur de l'enveloppe en direction du faisceau de filtration dans une zone délimitée par un cône dont l'axe a une direction perpendiculaire aux éléments filtrants et dont le sommet est situé au voisinage de la paroi de l'enveloppe.

L'invention est également relative à un procédé de décolmatage d'un appareil de filtration suivant l'invention.

Afin de bien faire comprendre l'invention, on va maintenant décrire, à titre d'exemple non limitatif, en se référant aux figures jointes en annexe, un mode de réalisation d'un appareil de filtration suivant l'invention et suivant plusieurs variantes.

La figure 1 est une vue en perspective avec arrachement de l'ensemble d'un appareil de filtration suivant l'invention.

La figure 2 est une vue en coupe du corps de l'appareil de filtration, au niveau des transducteurs d'ultrasons.

La figure 3 est une vue latérale d'un transducteur d'ultrasons.

La figure 4 est une vue schématique montrant la disposition d'un transducteur d'ultrasons et la zone d'efficacité de l'émission acoustique produite.

La figure 5 est une vue en coupe montrant le montage d'un transducteur d'ultrasons dans la paroi de l'appareil de filtration, suivant une première variante.

La figure 6 est une demi-vue en coupe montrant le montage d'un transducteur d'ultrasons dans la paroi de l'appareil de filtration, suivant une seconde variante.

La figure 7 est une demi-vue en coupe montrant le montage d'un transducteur d'ultrasons dans la paroi de l'appareil de filtration, suivant une troisième variante.

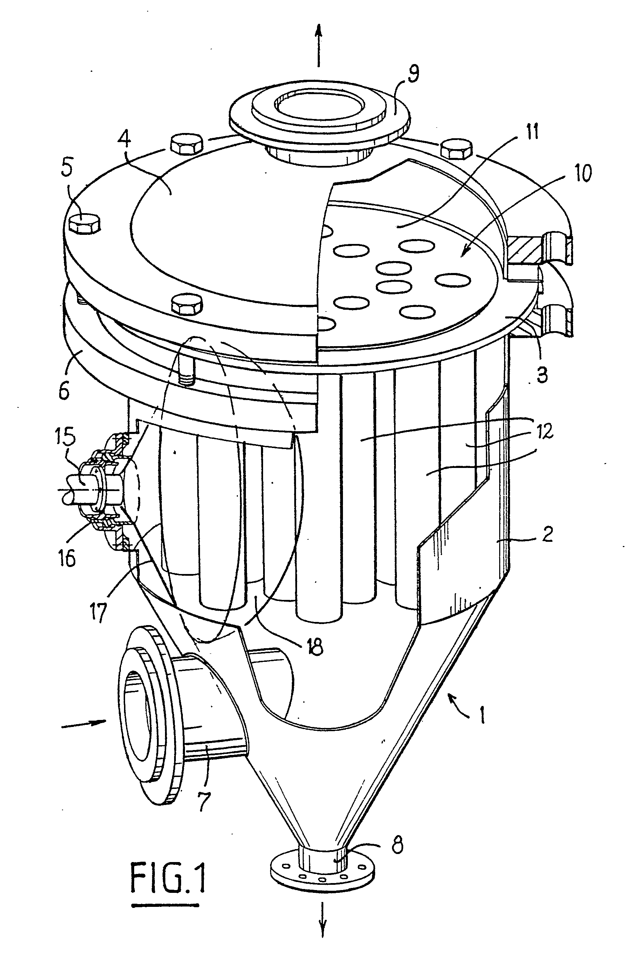

Sur la figure 1, on voit un appareil de filtration désigné de manière générale par le repère 1 comportant une enveloppe 2 de forme cylindro-tronconique disposée avec son axe dans la direction verticale.

Une bride 3 est solidaire de l'enveloppe 2 à son extrémité supérieure. Un couvercle 4 vient reposer sur la bride 3 de manière à fermer de manière étanche l'enveloppe 2 de l'appareil de filtration 1. Le couvercle 4 est serré par des vis 5 venant s'engager dans des trous filetés d'un anneau de serrage 6 solidaire de l'enveloppe 2.

L'enveloppe 2 comporte dans sa partie inférieure tronconique une tubulure 7 d'entrée de fluide à filtrer dans l'appareil de filtration et une tubulure de vidange 8 raccordée au point le plus bas de l'enveloppe 2.

Une tubulure de sortie de fluide épuré 9 est fixée sur le couvercle, dans une position centrale.

Un ensemble de filtration 10 est placé à l'intérieur de l'enveloppe 2 de manière à occuper une certaine longueur de l'enveloppe dans sa direction axiale verticale et une partie substantielle de sa section droite, dans sa partie cylindrique. Cet ensemble de filtration 10 est constitué par une plaque de tête 11 reposant sur la bride 3 sur laquelle sont fixés à l'une de leurs extrémités des éléments filtrants 12 constitués par des cartouches cylindriques qui peuvent être constituées par un matériau métallique fritté ou réalisées à partir d'un fil, par tissage. Dans tous les cas, le matériau présente une certaine porosité et sera désigné par la suite comme matériau poreux.

Les cartouches 12 sont fixées parallèlement les unes aux autres sur la plaque de tête 11 et sont placées verticalement, c'est-à-dire dans la direction de l'axe de l'enveloppe 2, de manière à constituer un faisceau s'étendant sur une certaine longueur de l'enveloppe du filtre dans la direction axiale et sur une partie substantielle de sa section droite.

La tubulure d'arrivée de liquide à filtrer 7 et la tubulure 9 d'évacuation de liquide filtré débouchent de part et d'autre de l'ensemble de filtration 10, dans la direction axiale de l'enveloppe 2. Le fluide à épurer traverse donc la paroi des cartouches de l'extérieur vers l'intérieur et s'écoule suivant leur longueur avant de ressortir par des ouvertures de la plaque de tête 11 dans l'espace situé en-dessous du couvercle 4.

L'appareil de filtration 1 comporte de plus un dispositif de décolmatage constitué par des transducteurs d'ultrasons 15 placés à l'intérieur de la paroi de l'enveloppe 2, dans sa partie cylindrique et à un niveau situé sensiblement au milieu de la zone occupée par l'ensemble de filtration 10.

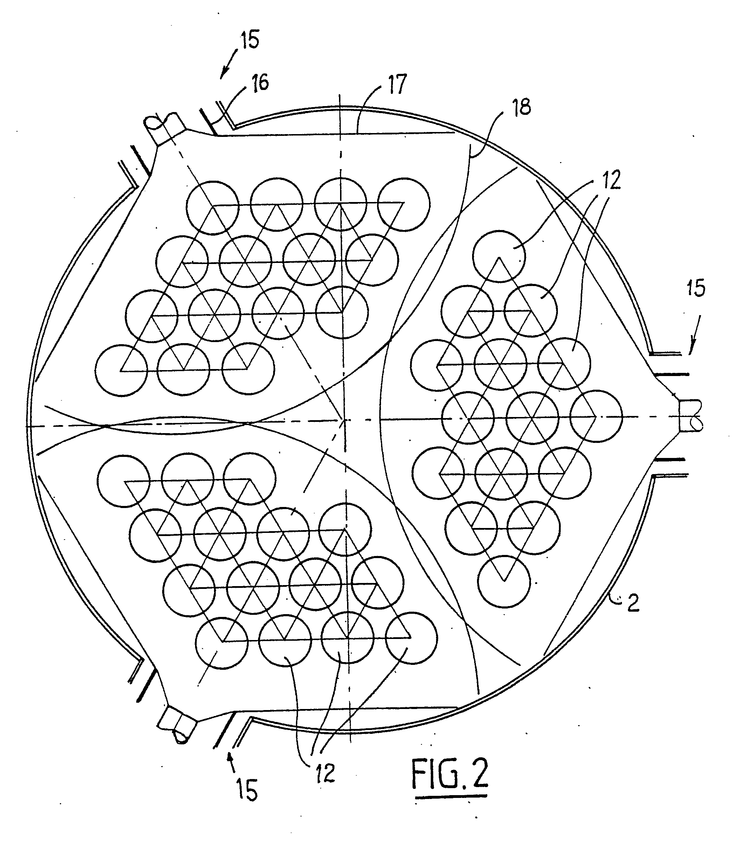

Comme il est visible sur la figure 2, dans le cas d'un appareil de filtration comportant quarante-cinq cartouches de filtration 12, on utilise trois transducteurs 15 dans des positions situées à 120° les unes des autres autour de l'enveloppe cylindrique 2.

Les transducteurs 15 sont fixés de manière étanche, par exemple par soudage d'une plaque de fixation, à l'intérieur d'un manchon de traversée 16 de la paroi de l'enveloppe 2.

Chacun des transducteurs, lorsque le dispositif de décolmatage est en service, émet des ultrasons de fréquence et de puissance choisies pour assurer de manière efficace le décolmatage des éléments filtrants 12, à l'intérieur d'un volume délimité par une surface conique 17 d'angle au sommet α fonction de la fréquence et par une surface sphérique 18 de rayon R̄ fonction de la puissance émise, le sommet du cône 17 et le centre de la sphère 18 étant situés à proximité de la paroi de l'enveloppe 2.

Sur la figure 2, on a représenté la section de la zone d'efficacité des ultrasons de chacun des transducteurs 15, par le plan de figure horizontal.

On voit que dans le cas d'un appareil de filtration comportant quarante-cinq cartouches réparties de la manière représentée, chacun des transducteurs 15 assure le décolmatage de quinze éléments filtrants.

L'angle du cône 17 délimitant la zone d'efficacité d'un transducteur est généralement de l'ordre de 90 à 100° et le rayon de la sphère 18 de l'ordre de 40 cm.

Toutefois, l'angle du cône d'efficacité 17 peut être élargi jusqu'à 120° environ par effet de diffraction sur le bord intérieur du manchon de traversée 16 du transducteur 15, lorsque ce transducteur est placé en retrait par rapport à la paroi de l'enveloppe 2.

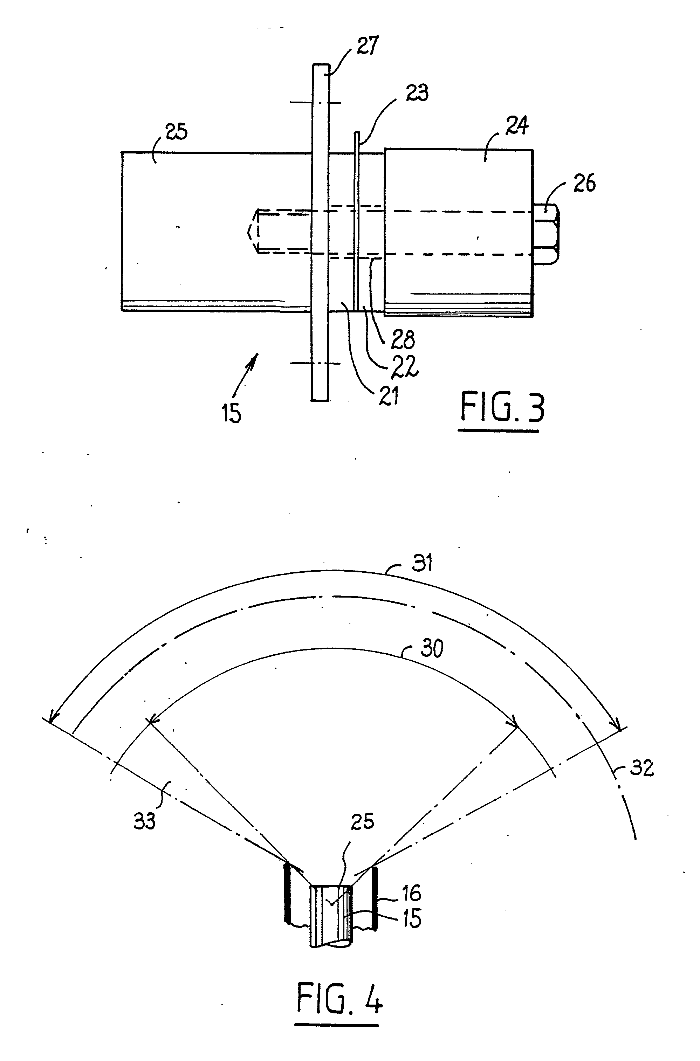

Sur la figure 3, on voit un transducteur d'ultrasons de type piézoélectrique. Ce transducteur comporte deux pastilles en céramique piézoélectrique 21 et 22 alimentées en courant électrique par l'intermédiaire d'un connecteur 23. Les pastilles 21 et 22 sont serrées entre deux masses métalliques 24 et 25 par l'intermédiaire d'une vis 26 disposée suivant l'axe des pastilles et des masses métalliques.

La masse métallique 24 constituant la partie arrière du transducteur assure l'amortissement des ondes émises dans la direction opposée à la direction d'émission.

La masse métallique 25 disposée à l'avant du transducteur constitue un pavillon émetteur pour les ondes ultrasonores générées par les pastilles 21 et 22. Une plaque de fixation 27 est fixée à la périphérie du pavillon émetteur 25 dans une position correspondant à un noeud de vibration de ce pavillon. La vis 26, dans sa partie traversant les pastilles piézoélectriques 21 et 22, est engagée dans un manchon 28 permettant d'assurer l'isolement de la vis.

Sur la figure 4, on voit, représenté de manière schématique, un transducteur 15 du type qui vient d'être décrit placé à l'intérieur d'un manchon 16 de traversée de l'enveloppe d'un corps de filtre.

Le transducteur 15 est fixé dans le manchon 16, de manière que la face d'extrémité avant de son pavillon émetteur 25 se trouve légèrement en retrait par rapport à l'extrémité du manchon 16 dirigée vers l'intérieur de l'enveloppe.

On voit que le faisceau d'ultrasons émis à l'intérieur d'un cône ayant un angle au sommet 30 sensiblement égal à 90° est diffracté par le bord d'extrémité du manchon 16, de manière que le cône d'efficacité des ultrasons ait un demi-angle au sommet accru de 15° environ.

Il en résulte que l'angle au sommet 31 du cône d'efficacité, après diffraction à l'extrémité du manchon 16, est voisin de 120°.

Dans le cas du mode de réalisation représenté, la zone d'efficacité des ultrasons à l'intérieur du filtre est délimitée, au niveau de chacun des transducteurs 15, par un cône d'angle au sommet 120° et par une sphère 32 dont le rayon est voisin de 40 cm. La section 33 de cette zone, dans un plan horizontal passant par l'axe du transducteur 15, est représentée sur la figure 4.

Des zones de forme identique ont été représentées sur la figure 2, dans le cas de trois transducteurs assurant le décolmatage de trois ensembles d'éléments filtrants.

Le montage du transducteur 15 et du manchon 16 sur l'enveloppe du filtre peut être réalisé de manière très simple en réalisant la fixation par soudure du manchon 16 dans une tubulure traversant l'enveloppe et la fixation également par soudure du transducteur 15 à l'intérieur du manchon 16, par l'intermédiaire de la plaque de fixation 27. On obtient ainsi une mise en place définitive des moyens de décolmatage sur le corps du filtre et une étanchéité parfaite.

Cependant, une telle disposition ne permet pas d'effectuer de réglage de la zone d'efficacité des ultrasons.

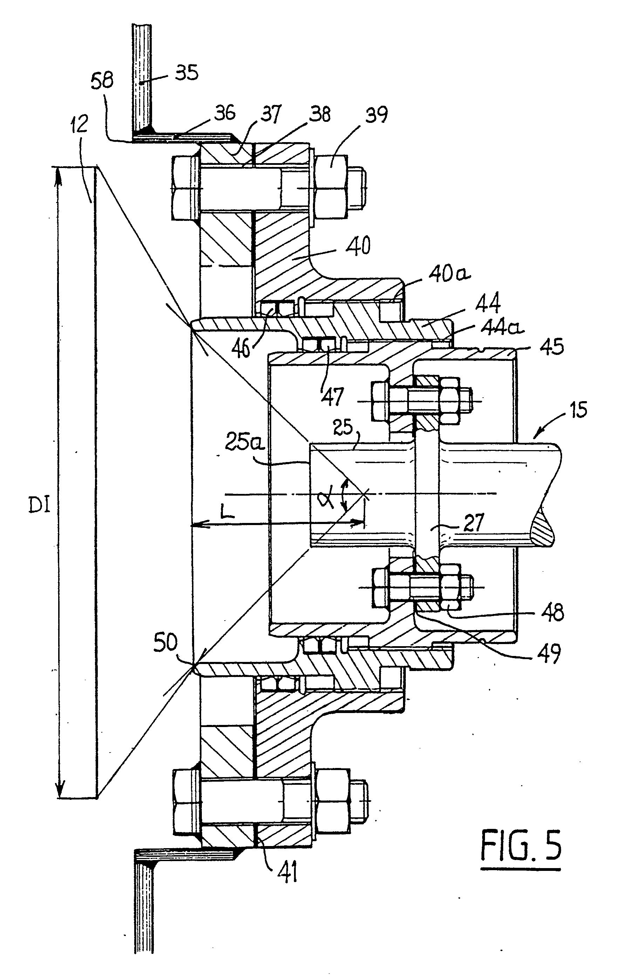

On va maintenant décrire, en se référant aux figures 5, 6 et 7, des dispositions permettant de régler, dans une certaine mesure, l'étendue de la zone d'efficacité des ultrasons.

Sur la figure 5, on voit une partie de la paroi 35 de l'enveloppe d'un filtre suivant l'invention, au niveau d'une ouverture de passage d'un transducteur d'ultrasons 15. Un tubulure 36 est fixée dans l'ouverture de la paroi 35, l'axe de la tubulure 36 horizontale ayant une direction radiale, c'est-à-dire perpendiculaire à l'axe de l'enveloppe du filtre.

Un anneau 37 est fixée par soudage à l'intérieur de la tubulure 36. Cet anneau 37 comporte des trous de passage de vis 38, pour la fixation d'une bride 40 par l'intermédiaire d'ensembles vissés 39. Un joint d'étanchéité 41 est intercalé entre l'anneau 37 et la bride 40. La bride 40 comporte une partie intérieure taraudée 40a dans laquelle vient s'engager une bague 44 filetée sur sa surface externe.

La bague 44, appelée bague externe, est taraudée à sa partie interne 44a et reçoit une seconde bague 45 ou bague interne comportant un filetage sur sa surface externe. Des joints d'étanchéité glissants 46 et 47 sont intercalés, respectivement entre la bride 40 et une partie lisse de la surface externe de la bague 44 et entre la bague externe 44 et une partie lisse de la surface externe de la bague interne 45.

Le transducteur 15 dont la structure est analogue à celle décrite en regard de la figure 3 est fixé à la partie interne de la bague 45 par l'intermédiaire de la plaque de fixation 27 rapportée de manière étanche sur un épaulement interne de la bague 45, grâce à des ensembles vissés 48 et à un joint d'étanchéité 49.

Le dispositif tel que représenté sur la figure 5 permet de régler d'une part la position du transducteur 15 par rapport à la surface latérale de l'ensemble filtrant 12, dans la direction radiale correspondant à l'axe du transducteur et d'autre part la position de la face antérieure du pavillon émetteur 25 du transducteur 15 par rapport à la face d'extrémité 50 de la bague externe 44.

La position du transducteur 15 par rapport à l'ensemble filtrant 12 peut être réglée en vissant ou en dévissant la bague 44 à l'intérieur du taraudage 40a.

La position de la face antérieure du pavillon émetteur 25 du transducteur 15, par rapport à la section d'extrémité de la bague externe 44, peut être réglée en vissant ou en dévissant la bague intérieure 45 à l'intérieur du taraudage 44a.

Le déplacement de la face émettrice 25a du transducteur 15 par rapport à la section 50 de la bague externe permet de régler la position de la zone d'interception du cône d'émission du transducteur (d'angle au sommet $\alpha$ sensiblement égal à 90°), par réglage de la longueur L séparant le sommet du cône d'émission de l'arête 50 constituée par l'extrémité de la bague 44.

Le déplacement du transducteur 15 par rapport à la face latérale de l'ensemble filtrant 12 permet de régler le diamètre d'interception DI des éléments filtrants par les ultrasons émis.

Ces différents réglages permettent d'adapter l'ouverture et la position du cône d'efficacité des ultrasons aux dimensions de l'ensemble filtrant.

Il est à remarquer que, lorsque l'ensemble filtrant présente une hauteur relativement importante, les transducteurs 15 peuvent être disposés suivant plusieurs jeux situés dans des plans horizontaux placés à différents niveaux suivant la hauteur de l'enveloppe du filtre. Le réglage des transducteurs sera alors effectué de manière que les différentes zones d'efficacité suivant la hauteur des éléments filtrants soient superposées ou se recoupent légèrement, pour intéresser l'ensemble de la hauteur des éléments filtrants.

De même, la distance, dans la direction radiale, entre la face d'émission du transducteur 15 et les éléments filtrants, est réglée de manière que la sphère d'efficacité des ultrasons englobe l'ensemble d'éléments filtrants voulu.

Lorsque le réglage a été réalisé, on effectue le blocage en position de la bague externe 44 par rapport à la bride 40 et de la bague interne 45 par rapport à la bague externe 44.

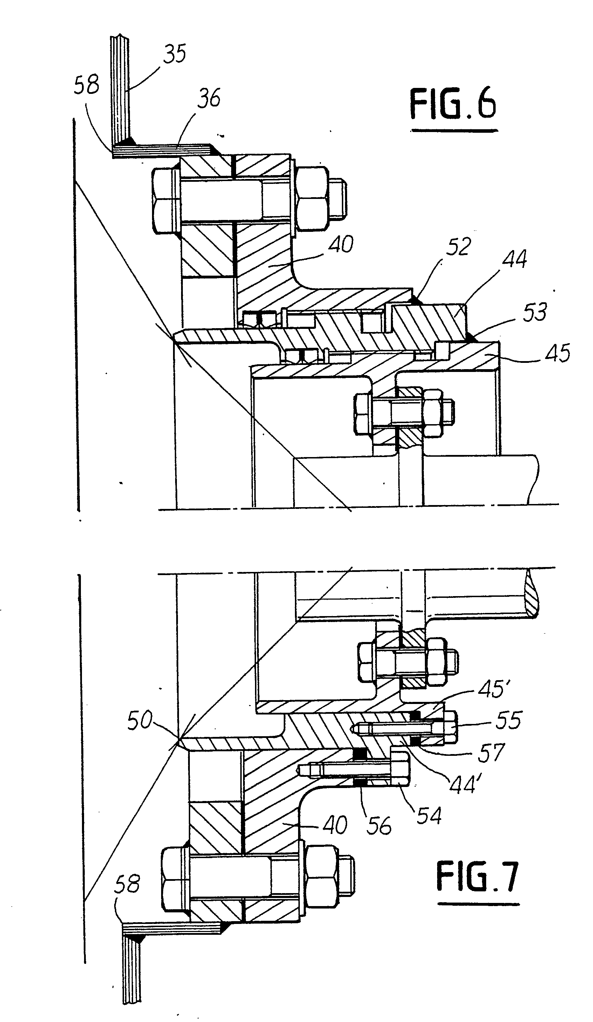

On a représenté, sur les figures 6 et 7, deux modes de réalisation différents de ce blocage en position.

Les éléments correspondants sur les figures 6 et 7 d'une part et sur la figure 5 d'autre part portent les mêmes repères.

Le dispositif selon le mode de réalisation de la figure 6 est caractérisé par un blocage en position de la bague externe 44 par rapport à la bride 40 et de la bague interne 45 par rapport à la bague externe 44, par des joints de soudure, respectivement 52 et 53. Les joints de soudure 52 et 53 réalisent également l'étanchéité entre les pièces correspondantes.

Dans le mode de réalisation représenté sur la figure 7, le blocage en position de la bague externe 44' par rapport à la bride 40 et de la bague interne 45' par rapport à la bague externe 44' est réalisé respectivement par des vis 54 et 55. Des joints 56 et 57 permettent de réaliser l'étanchéité entre les pièces correspondantes.

Il est à remarquer que dans tous les cas il est possible de déplacer le transducteur 15 par rapport à la bride 40 de manière que le faisceau d'ultrasons diffracté par la surface d'extrémité 50 de la bague externe 44 (ou 44') soit également diffracté par l'arête de raccordement 58 entre la tubulure 36 et la paroi de l'enveloppe de filtre 35.

L'appareil de filtration suivant l'invention comportant des dispositifs de décolmatage intégrés est d'un entretien très facile, dans la mesure où les éléments de filtration poreux peuvent être régénérés sans aucun démontage préalable. Pour effectuer la régénération, il suffit d'isoler le corps de filtre du circuit sur lequel il est intercalé, en fermant des vannes sur les conduites d'arrivée et d'évacuation de fluide. L'enveloppe du corps de filtre est alors remplie de fluide isolé du circuit. Les différents transducteurs placés dans l'enveloppe du filtre sont ensuite alimentés de manière à générer des ultrasons dont les zones d'efficacité recouvrent, dans leur ensemble, les éléments filtrants 12. Les ultrasons sont transmis par le fluide remplissant l'enveloppe du filtre.

Les particules retenues par les éléments filtrants sont arrachées des pores de ces éléments, selon le phénomène décrit plus haut.

Ces particules tombent par gravité dans le fond de l'enveloppe du filtre où elles s'accumulent.

Lorsque le décolmatage a permis de restaurer une perméabilité suffisante des éléments filtrants, on coupe l'alimentation des transducteurs et on évacue les particules arrachées au filtre, par la conduite de vidange 8.

Le filtre peut être remis en service immédiatement.

L'invention ne se limite pas aux modes de réalisation qui ont été décrits.

C'est ainsi qu'on peut utiliser suivant la disposition et les dimensions des éléments filtrants un seul transducteur ou un ensemble de transducteurs répartis à la périphérie de l'enveloppe, soit dans un seul plan horizontal soit dans des plans horizontaux espacés suivant la hauteur du filtre et décalés angulairement afin d'obtenir un recoupement des cônes d'émission des différents transducteurs et ainsi une action efficace dans l'ensemble du volume du filtre.

On peut utiliser aussi bien des transducteurs à magnétostriction que des transducteurs piézoélectriques.

Le montage de ces transducteurs soit en position fixe soit en position réglable dans la paroi du filtre peut être réalisé d'une manière différente de celles qui ont été décrites.

Enfin, l'invention s'applique dans le cas de tout appareil de filtration comportant une enveloppe dans laquelle sont placés des éléments filtrants utilisé pour la filtration de fluides dans le domaine de l'industrie nucléaire ou dans d'autres industries telles que l'industrie chimique produisant ou mettant en oeuvre des fluides dangereux. Le dispositif suivant l'invention est particulièrement bien adapté aucas de filtres dont les éléments de filtration se colmatent rapidement.

## Revendications

1.- Appareil de filtration comportant une enveloppe cylindrique (2), une conduite d'arrivée (7) de liquide à filtrer dans l'enveloppe (2), une conduite d'évacuation (9) de liquide filtré et un moyen de filtration interposé entre lesdites conduites réalisé en un matériau poreux ainsi qu'un dispositif de décolmatage par ultrasons (15, 16) du moyen de filtration poreux (12) comportant au moins un transducteur d'ultrasons (15), caractérisé par le fait :
- qu'il comporte un faisceau d'éléments poreux (12) s'étendant sur une certaine longueur de l'enveloppe (2) dans une direction axiale et sur une partie substantielle de sa section droite et au moins un ensemble de transducteurs (15) disposés dans un moins un plan de section droite de l'enveloppe (2) de l'appareil de filtration dans des positions régulièrement espacées à la périphérie de l'enveloppe (2),
- et que chacun des transducteurs (15) est placé à l'intérieur d'une ouverture traversant l'enveloppe dans une direction perpendiculaire à l'axe de l'enveloppe de manière à émettre des ultrasons à l'intérieur de l'enveloppe (2) en direction du faisceau de filtration (12) dans une zone délimitée par un cône dont l'axe a une direction perpendiculaire aux éléments filtrants et dont le sommet est situé au voisinage de la paroi de l'enveloppe (2).

2.- Appareil de filtration suivant la revendication 1, caractérisé par le fait qu'il comporte au moins deux ensembles de transducteurs (15) disposés chacun dans un plan de section droite de l'enveloppe (2), les plans contenant les transducteurs (15) étant espacés suivant la direction axiale de l'enveloppe (2).

3.- Appareil de filtration suivant l'une quelconque des revendications 1 à 2, caractérisé par le fait que les transducteurs sont disposés chacun, dans l'ouverture correspondante de l'enveloppe (2), à l'intérieur d'un manchon (16) dont l'axe est disposé suivant une direction perpendiculaire aux éléments de filtration, en retrait par rapport à la face d'extrémité du manchon (16) dirigée vers l'intérieur de l'enveloppe (2), de façon que le faisceau d'ultrasons émis par le transducteurs (15) soit diffracté sur la face d'extrémité (50) du manchon (16) dirigée vers l'intérieur de l'enveloppe (2).

4.- Appareil de filtration suivant l'une quelconque des revendications 1 à 3, caractérisé par le fait que le transducteur (15) est fixé à l'intérieur d'une bague interne (45) comportant une partie filetée sur sa surface externe et engagée dans une partie taraudée (44a) d'une bague externe comprenant elle-même une partie filetée sur sa surface externe engagée dans une partie taraudée (40a) d'une bride (40) fixée dans l'ouverture de passage du transducteur (15) dans l'enveloppe (2), la bride (40), la bague externe (44) et la bague interne (45) étant toutes coaxiales et ayant pour axe commun la direction radiale de l'ouverture de l'enveloppe (2) de manière que la position du transducteur (15) dans la direction radiale puisse être réglée par vissage ou dévissage de la bague externe (40) dans la partie taraudée (40a) et que la position relative du transducteur (15) par rapport à la face d'extrémité (50) de la bague externe (44) dirigée vers l'intérieur de l'enveloppe (2) puisse être réglée par vissage ou dévissage de la bague interne (45) dans la partie taraudée (44a).

5.- Appareil de filtration suivant la revendication 4, caractérisé par le fait que la bague externe (44) est rendue solidaire de la bride (40) par un joint de soudure (52) continu assurant la jonction étanche de ces deux pièces et que la bague interne (45) est rendue solidaire de la bague externe (44) par un second joint de soudure (53) continu assurant l'étanchéité entre ces deux pièces.

6.- Appareil de filtration suivant la revendication 4, caractérisé par le fait que la bague externe (44′) est rendue solidaire de la bride (40) par une première liaison vissée (54) et que la bague interne (45′) est rendue solidaire de la bague externe (44′) par une seconde liaison vissée (55), des joints (56) et (57) intercalés entre la bride (40) et la bague externe (44′) et entre la bague externe (44′) et la bague interne (45′) respectivement assurant l'étanchéité entre ces pièces.

7.- Appareil de filtration suivant l'une quelconque des revendications 1 à 6, caractérisé par le fait que le transducteur (15) comporte au moins un moyen d'émission d'ultrasons (21, 22) en contact avec une masse métallique (25) constituant un pavillon émetteur et une plaque (27) de fixation sur l'enveloppe (2) du filtre fixée à la périphérie du pavillon émetteur (25), dans une position correspondant à un noeud de vibration du pavillon émetteur (25).

8.- Procédé de décolmatage par ultrasons des éléments de filtration poreux (12) d'un filtre comportant une enveloppe (2) et un moyen de filtration constitué par un ensemble d'éléments (12) en matériau poreux disposés sur une certaine longueur de l'enveloppe (2) dans une direction axiale, l'appareil étant disposé sur un circuit d'alimentation en fluide à fil trer et de récupération du fluide filtré, caractérisé par le fait :

- qu'on isole l'enveloppe du filtre du circuit de récupération et d'évacuation de fluide,

- qu'on émet des ultrasons au moyen de transducteurs fixés sur la paroi de l'enveloppe, en un point au moins de cette enveloppe, à l'intérieur d'un cône dont l'axe a une direction perpendiculaire aux éléments filtrants (2) et dont le sommet se trouve au voisinage de la paroi de l'enveloppe (2), à l'intérieur d'un fluide remplissant l'enveloppe (2) en direction des éléments de filtration (12) de façon à arracher les particules retenues par les éléments de filtration (12), les ultrasons émis vers l'intérieur de l'enveloppe (2) étant diffractés par une arête (50, 58) centrée sur l'axe d'émission des ultrasons, de façon à accroître l'angle au sommet du cône d'efficacité dans lequel sont émis les ultrasons,

- et qu'on évacue par une extrémité de l'enveloppe (2) de l'appareil de filtration, les particules arrachées aux éléments filtrants (12).

FIG.1

FIG.2

FIG. 3

FIG. 4

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 556 005 (EASTMAN KODAK) * Pages 2-3 * --- | 1,3,7,8 | B 01 D 29/11 B 01 D 29/52 B 01 D 29/72 |
| A | GB-A-1 166 331 (EASTMAN KODAK) * Pages 2-3 * --- | 1,3,8 | |
| A | US-A-4 158 629 (H.T. SAWYER) * Colonnes 3-8 * ----- | 1,3,8 | |

**DOMAINES TECHNIQUES RECHERCHES (Int. Cl.5)**

B 01 D

Le présent rapport a été établi pour toutes les revendications

| Lieu de la recherche | Date d'achèvement de la recherche | Examinateur |
|---|---|---|
| LA HAYE | 20-02-1990 | DE PAEPE P.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)